# EUROPEAN PATENT APPLICATION

(11) **EP 4 186 623 A1**
(43) Date of publication of application: **31.05.2023**
(21) Application number: 22206354.7
(22) Date of filing: 09.11.2022
(51) Int. Cl.: B23C 3/35

(54) **KEY CUTTING MACHINE**

(30) Priority: 25.11.2021 GB 202117034
(71) Applicant: Iconx International Limited, Manchester M23 9TT (GB)
(72) Inventor: HORSFALL, Dave, Manchester, M23 9TT (GB); CROWTHER, Polly, Manchester, M23 9TT (GB)
(74) Representative: Swindell & Pearson Limited

(57) **Abstract**

A key cutting machine is provided that comprises: one or more key cutting instruments; a key clamp; a key clamp support; first, second and third sets of rails; and first, second and third motors. The key clamp is for receiving and retaining a key blank. The key clamp support is arranged to support the key clamp. The first set of rails is substantially orthogonal to the second set of rails and the third set of rails. The second set of rails is substantially orthogonal to the third set of rails. The first motor is arranged to move the key clamp support along the first set of rails relative to the one or more key cutting instruments. The second motor is arranged to move the key clamp support along the second set of rails relative to the one or more key cutting instruments. The third motor is arranged to move the key clamp support along the third set of rails relative to the one or more key cutting instruments.

## Description

### TECHNOLOGICAL FIELD

Embodiments of the present disclosure relate to a key cutting machine. Some relate to an assembly for moving a key clamp support within a key cutting machine.

### BACKGROUND

Key cutting machines are configured to cut a key blank to a particular shape in order to replicate a particular key. In order to cut the key blank, it is necessary to move the key blank to one or more cutting instruments, such as a cutting blade or a deburrer. The movement of the key blank to the cutting instruments must be precise, to ensure that the key blank is cut to the correct shape. Furthermore, the key blank should be held securely whilst being cut, to prevent vibrations that could cause imperfections in the cut.

### BRIEF SUMMARY

According to various, but not necessarily all, embodiments there is provided a key cutting machine, comprising: one or more key cutting instruments; a key clamp for receiving and retaining a key blank; a key clamp support arranged to support the key clamp; a first set of rails, a second set of rails and a third set of rails, the first set of rails being substantially orthogonal to the second set of rails and the third set of rails, and the second set of rails being substantially orthogonal to the third set of rails; a first motor arranged to move the key clamp support along the first set of rails relative to the one or more key cutting instruments; a second motor arranged to move the key clamp support along the second set of rails relative to the one or more key cutting instruments; and a third motor arranged to move the key clamp support along the third set of rails relative to the one or more key cutting instruments.

The key cutting machine may further comprise a frame. At least one of the one or more key cutting instruments may be fixed to the frame. The first set of rails may be arranged to enable movement of the key clamp support towards and away from the at least one key cutting instrument fixed to the frame.

The first set of rails may comprise a threaded rotatable rail having a ball screw thereon that is coupled to the key clamp support. The first motor may be configured to rotate the threaded rotatable rail of the first set of rails and cause the ball screw to move the key clamp support towards and away from the at least one key cutting instrument fixed to the frame.

The frame may comprise a wall to which the at least one key cutting instrument is fixed. The first set of rails may be arranged to enable movement of the key clamp support towards and away from the wall of the frame.

The frame may comprise side walls. The first set of rails may comprise a plurality of rails mounted to inner surfaces of the side walls of the frame.

The second set of rails may be arranged to enable horizontal movement of the key clamp support. The second set of rails may be arranged to enable horizontal movement of the key clamp support across the wall of the frame.

The second set of rails may be positioned at least partially above the first set of rails. At least one rail in the second set of rails may be positioned on a platform that is supported at least partially by the first set of rails.

The second set of rails may comprise a threaded rotatable rail having a ball screw thereon that is coupled to the key clamp support. A second motor may be configured to rotate the threaded rotatable rail of the second set of rails and cause the ball screw to move the key clamp horizontally across the wall of the frame.

The second motor may be arranged to move the key clamp support along the second set of rails, relative to the one or more key cutting instruments, without needing to simultaneously move the first motor.

The second motor may be arranged to cause the third motor to move, relative to the second set of rails, when moving the key clamp support along the second set of rails relative to the one or more key cutting instruments.

The third motor may be arranged to move the key clamp support vertically along the third set of rails. The third set of rails may comprise a threaded rotatable rail having a ball screw thereon that is coupled to the key clamp support. The third motor may be arranged to rotate the threaded rotatable rail of the third set of rails and cause the ball screw to move the key clamp vertically.

The third motor may be arranged to move the key clamp support along the third set of rails, relative to the one or more key cutting instruments, without needing to simultaneously move the first motor and the second motor.

The key cutting machine may further comprise a platform arranged to travel along the second set of rails. The third set of rails may be supported by the platform.

The key clamp may comprise first and second jaws for receiving and retaining a key blank. The key cutting machine may comprise a fourth motor configured to cause relative movement of the first and second jaws. The fourth motor may be supported by the key clamp support. The first, second and third motors may be arranged to cause the fourth motor to move along the first, second and third sets of rails with the key clamp support.

The first motor may be configured to cause the second, third and fourth motors to move when causing the key clamp support to move along the first set of rails relative to the one or more key cutting instruments.

According to various, but not necessarily all, embodiments there is provided a key cutting machine, comprising: one or more key cutting instruments; a key clamp for receiving and retaining a key blank; at least first, second and third rails, each of the first, second and third rails being substantially orthogonal to each other; and one or more motors arranged to move the key clamp along each of the first, second and third rails relative to the one or more key cutting instruments.

According to various, but not necessarily all, embodiments there is provided examples as claimed in the appended claims.

### BRIEF DESCRIPTION

Some examples will now be described with reference to the accompanying drawings in which:
FIG. 1A illustrates a first rear perspective view of a key cutting machine;
FIG. 1B illustrates a second rear perspective view of the key cutting machine;
FIG. 1C illustrates a first side view of the key cutting machine;
FIG. 1D illustrates a second side view of the key cutting machine;
FIG. 1E illustrates a front view of the key cutting machine;
FIG. 2 illustrates a key clamp of the key cutting machine;
FIGs 3A, 3B & 3C illustrates perspective views of a lower portion of the key cutting machine;
FIG. 4 illustrates a key clamp support of the key cutting machine, where parts have been removed to expose a motor configured to operate the key clamp;
FIG. 5 illustrates a rear view of part of the key cutting machine with parts removed;
FIG. 6 illustrates a perspective view of the key cutting machine with parts removed;
FIG. 7 illustrates an example of a bearing;
FIG. 8A illustrates a front perspective view of an alternative key clamp support for the key cutting machine;
FIG. 8B illustrates a rear perspective view of the alternative key clamp support; and
FIG. 8C illustrates a front view of the alternative key clamp support.

### DETAILED DESCRIPTION

Embodiments of the invention relate to a key cutting machine 10 for cutting a key blank to replicate an existing key, so as to provide a duplicate copy or copies of the existing key.

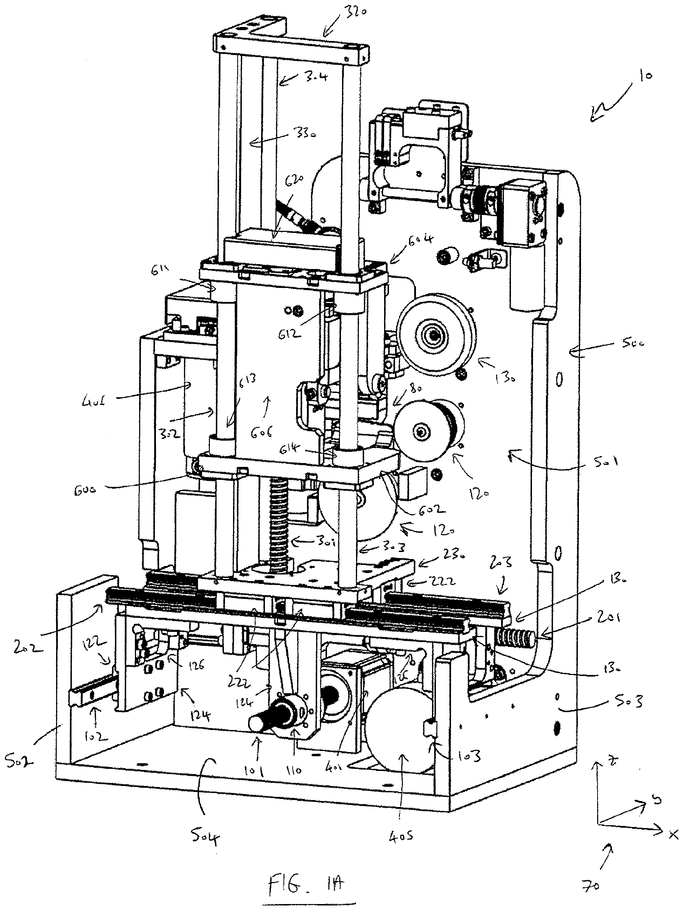

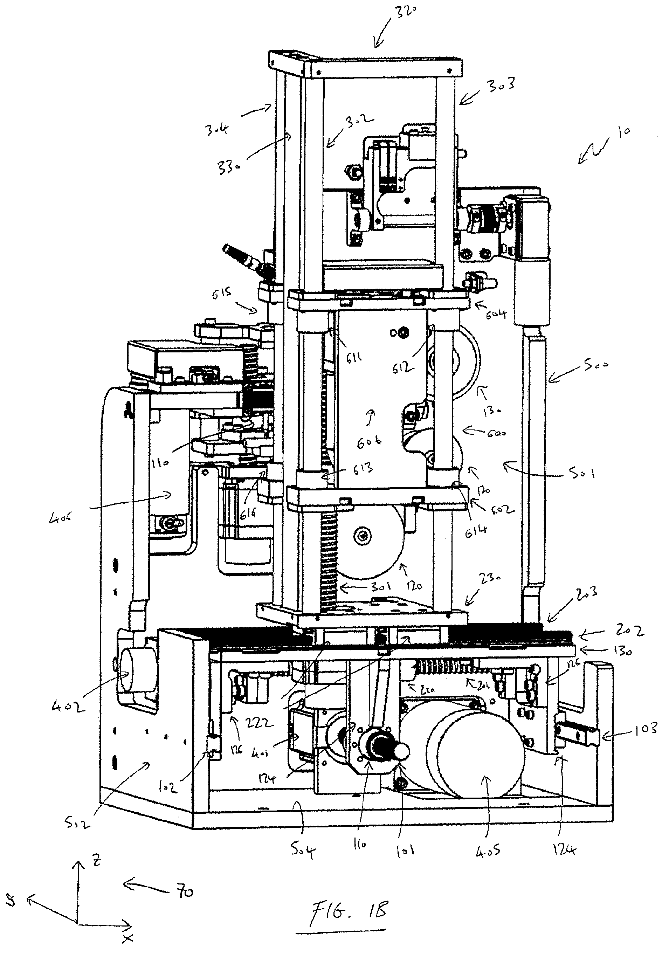

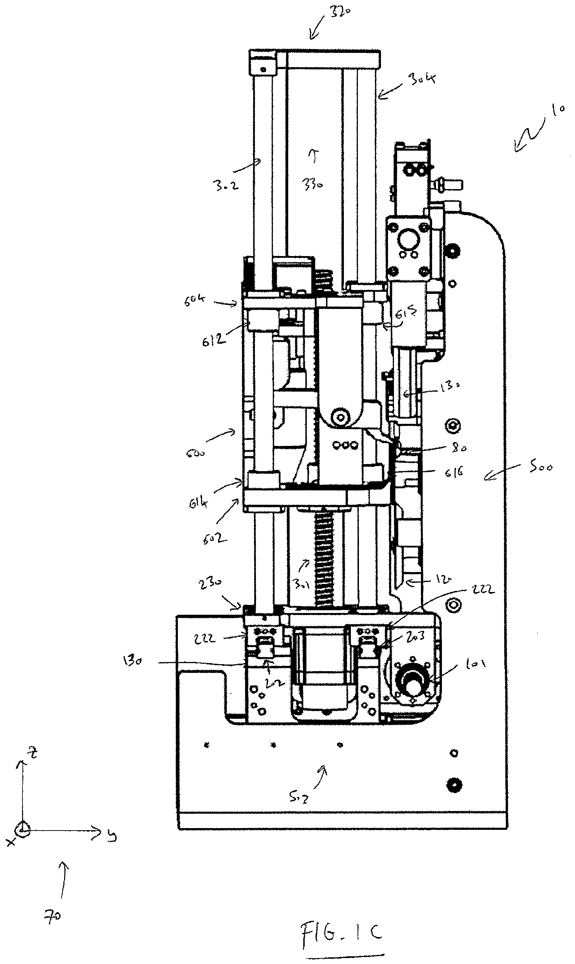

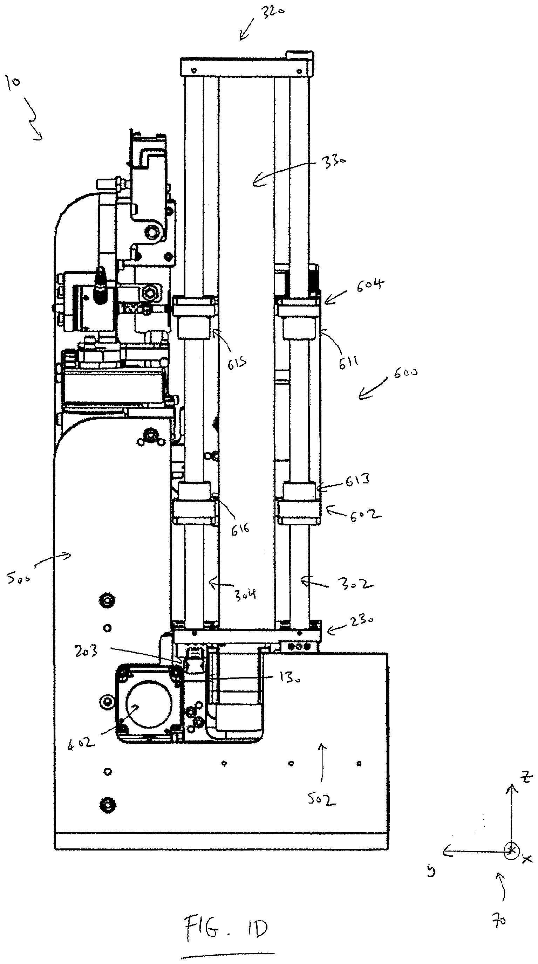

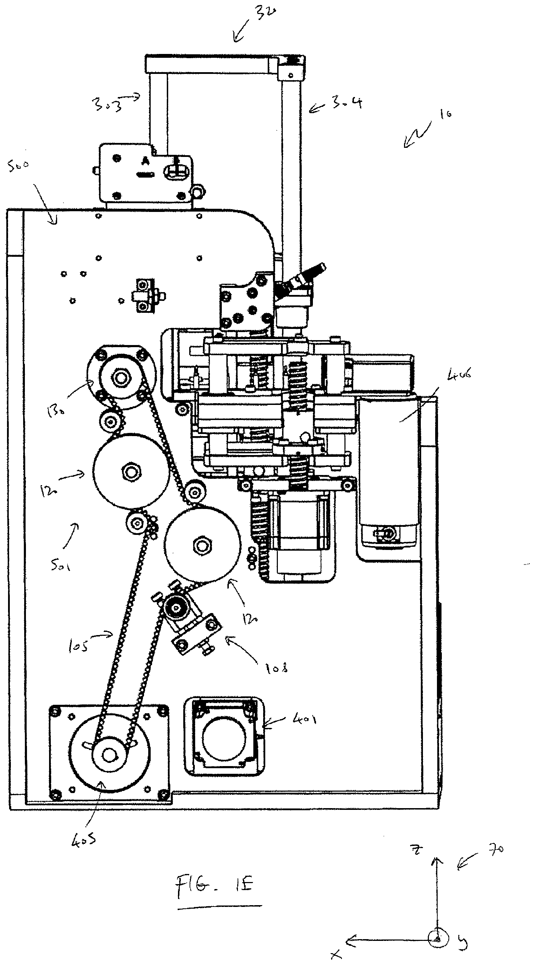

FIGs 1A, 1B, 1C, 1D and 1E illustrate a first rear perspective view, a second rear perspective view, a first side view, a second side view and a front view of the key cutting machine 10. All of the FIGs include Cartesian co-ordinate axes 70 to enable the reader to orientate the FIGs relative to one another. The x-axis defines a width/lateral dimension, the y-axis defines a depth dimension and the z-axis defines a vertical dimension. Each of the dimensions is orthogonal to the others.

The key cutting machine 10 may comprise one or more key cutting instruments 110, 120, 130, a key clamp 80, a key clamp support 600, a first set of rails 101-103, a second set of rails 201-203, a third set of rails 301-304, a first motor 401, a second motor 402 and a third motor 403.

The key cutting instruments 110, 120, 130 are configured to cut a key blank in order to replicate an existing key. The key cutting instruments 110, 120, 130 may comprise a milling module 110 (e.g., see FIG. 1B), one or more cutting blades 120 (e.g., see FIG. 1A), and/or a deburrer 130 (e.g., see FIG. 1A). The cutting blade(s) 120 and/or the deburrer 130 may be rotational cutting instruments, as illustrated in the FIGs.

The key cutting machine 10 comprises a support frame 500 to which the other elements of the machine 10 are directly or indirectly mounted. The support frame 500 is best seen in FIGs 1A to 1E, where it can be viewed from various angles. The frame 500 comprises a main wall 501, a first side wall 502, a second side wall 503 and a floor/base 504. In the illustrated example, at least some of the key cutting instruments 10 are fixed to the main wall 501 of the frame 500.

The main wall 501 has a length in the vertical dimension, a width in the width dimension and a depth/thickness in the depth dimension. The length and the width of the main wall 501 are greater than the depth. In the illustrated example, the length of the main wall 501 is greater than the width, but this might not be the case in other examples. Each side wall 502, 503 has a length in the depth dimension, a width in the vertical dimension and a depth/thickness in the width dimension. The length and the width of each side wall 502, 503 is greater than the depth. In the illustrated example, the length of each side wall 502, 503 is greater than the width, but this might not be the case in other examples.

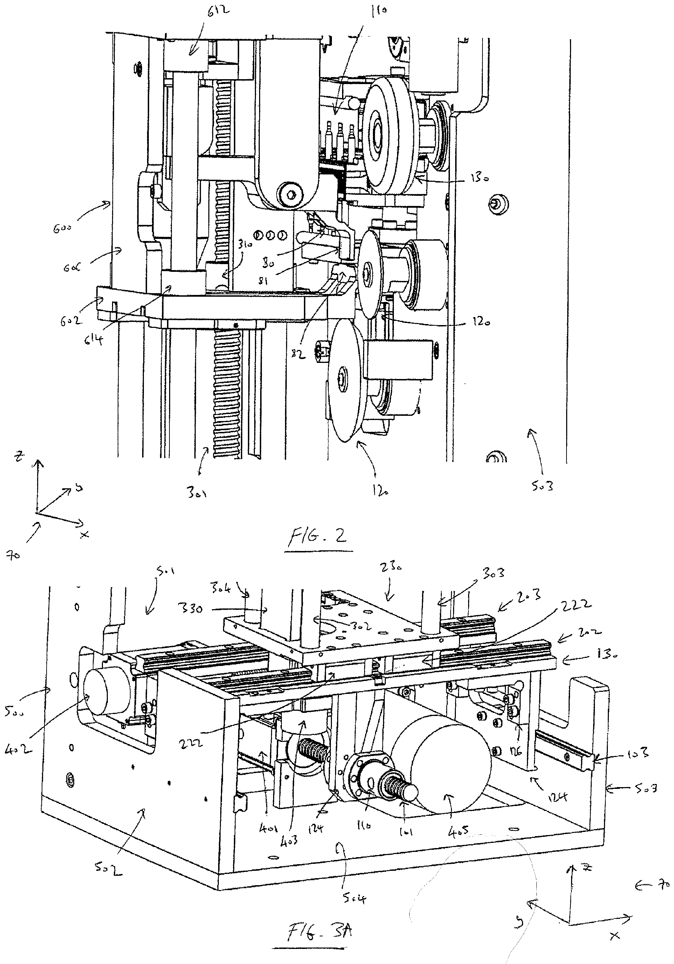

FIG. 2 illustrates a close-up of a central portion of the machine in which the key clamp 80, a portion of the key clamp support 600 and the cutting instruments 110, 120, 130 can be seen.

The key clamp 80 is for receiving and retaining a key blank in order to enable it to be cut by the key cutting instruments 110, 120, 130. The key clamp 80 is configured to hold the key blank while it is being moved into position in preparation for cutting, and configured to hold the key blank while it is being cut by a key cutting instrument 110, 120, 130. In this regard, the key clamp 80 may comprise a plurality of jaws 81, 82 for gripping the key blank, such as by the head or the shank of the key blank. The key clamp support 600 is arranged to support the key clamp 80. For example, the key clamp 80 may be mounted to the key clamp support 600.

In embodiments of the invention, the key clamp 80 and the key clamp support 600 may be movable independently in each of three orthogonal dimensions, enabling a key blank held by the key clamp 80 to be moved and therefore cut with very high precision. This is described in further detail below.

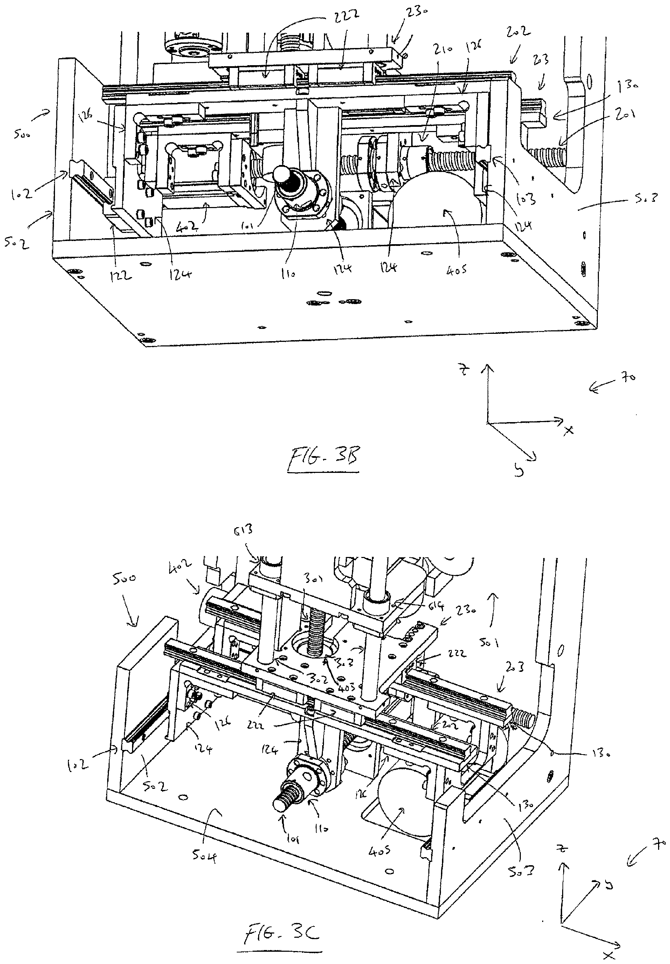

The first set of rails 101-103 is best seen in FIGs 3A, 3B and 3C, which illustrate perspective views of a lower portion of the key cutting machine 10. The first set of rails 101-103 may be arranged to enable horizontal movement of the key clamp support 600 towards and away from the key cutting instrument(s) 110, 120, 130 in the depth dimension.

In this regard, each rail in the first set of rails 101-103 has its greatest extent in the depth dimension, defined by the y-axis in the FIGs. That is, each rail in the first set of rails 101-103 is elongate in the depth dimension. In the illustrated example, the first set of rails 101-103 has three rails, but in other examples it could include more or fewer rails.

A first (central) rail 101 is provided in the first set of rails 101-103 along with second and third side rails 102, 103. One of the side rails 102 is mounted to an inner surface of the first side wall 502 of the frame 500. The other side rail 103 is mounted to an inner surface of the second side wall 503 of the frame 500. Each of the side rails 102, 103 has at least one carriage 122 thereon that is able to slide along the rail 102, 103 on which it is mounted.

Advantageously, the first set of rails 101-103 is not located on or proximate to the floor 504 of the machine 10, and neither are the other sets of rails 201-203, 301-304. Swarf resulting from the cutting of keys may fall on the floor 504 of the frame 500. Positioning the first set of rails 101-103 above the floor 504 (e.g., by mounting the side rails 102 to the side walls 502, 503 of the frame 500) means that small build-ups of swarf on the floor 504 should not affect the operation of the machine 10.

In this example, the first rail 101 extends from the first motor 401 and is an elongate shaft with an external threading. A ball screw 110 is located on the first rail 101 and extends around at least the majority of the circumference of the first rail 101. The ball screw 110 is engageable with the external thread on the first rail 101.

The first motor 401 may be a stepper motor. The first motor 401 is configured to rotate the first rail 101, which causes the ball screw 110 to move along the first rail 101.

The key cutting machine 10 comprises at least one platform 130 to which some (but not all) of the rails 202, 203 in the second set of rails 201-203 are mounted. In this example there is a single platform 130, but in other examples each rail 202, 203 may have its own platform. The machine 10 comprises supports 124 which connect the platform 130 to the carriages 122 and the ball screw 110. A central support 124 fixedly connects the ball screw 110 to the platform 130, and side supports 124 fixedly connect the carriages 124 to the platform 130. Optional Strengthening brackets 126 are provided in the illustrated example, which strengthen the connection between the side supports 124 and the platform 130 and help to support the weight being borne.

The platform(s) 130 on which the second and third rails 202, 203 is/are positioned is/are at least partially supported by the second and third rails 102, 103 in the first set of rails 101-103.

When the first motor 401 rotates the first rail 101 to move the ball screw 110, movement of the ball screw 110 causes the platform 130 and the carriages 122 to move in the depth dimension, due to the (fixed) interconnection made by the supports 124 between the ball screw 110, the platform 130 and the carriages 122.

The second set of rails 201-203 is best seen in FIGs 3A, 3B and 3C, which illustrate perspective views of a lower portion of the key cutting machine 10. The second set of rails 201-203 may be arranged to enable lateral/horizontal movement of the key clamp support 600 across the main wall 501 of the frame 500 and across the key cutting instrument(s) 110, 120, 130 in the width dimension defined by the x-axis in the FIGs.

In this regard, each rail in the second set of rails 201-203 has its greatest extent in the width dimension. That is, each rail in the second set of rails 201-203 is elongate in the width dimension. In the illustrated example, the second set of rails 201-203 has three rails, but in other examples it could include more or fewer rails.

In this example, a first rail 201 in the second set of rails 201-203 is provided that is not positioned on the platform 130. The first rail 201 is best seen in FIG. 3B. The first rail 201 extends from the second motor 402, and is an elongate shaft with an external threading. A ball screw 210 is located on the first rail 201 and extends around at least the majority of the circumference of the first rail 201. The ball screw 210 is engageable with the external thread on the first rail 201.

The second motor 402 may be a stepper motor. The second motor 402 is configured to rotate the first rail 201, which causes the ball screw 210 to move along the first rail 201.

The key cutting machine 10 comprises at least one platform 230 to which the third set of rails 301-304 are mounted. In this example there is a single platform 230, but in other examples more than one platform 230 could be provided. Each of the second and third rails 202, 203 in the second set of rails 201-203 has at least one carriage 222 thereon that is able to slide along the rail 202, 203 on which it is mounted. The carriages 222 are fixed to the platform 230 and enable movement of the platform 230 along those rails 202, 203.

Each of the rails 301-304 in the third set of rails 301-304 is mounted to the platform 230, and is arranged to move with the platform 230 as it moves along the second set of rails 201-203. In this regard, a first rail 301 in the third set of rails 301-304 extends from the third motor 403 and is mounted to the platform 230 via the mounting of the third motor 403 to the platform 230. This is best seen in FIGs 3A and 3C, which illustrate the third motor 403 mounted to the underside of the platform 230. The first rail 301 is mounted to the platform 230 via the third motor 403, and extends vertically from the third motor 403 through an aperture in the platform 230. The other rails 302-304 are mounted directed on the platform 230 in this example and extend upwardly from the platform 230.

As shown in FIG. 3B, a support 124 fixedly connects the ball screw 210 on the first rail 201 in the second set of rails 201-203 to the platform 230. When the second motor 402 rotates the first rail 201 in the second set of rails 201-203 to move the ball screw 210, the (fixed) interconnection between the ball screw 210, the support 124, the platform 230 and the carriages 222 causes platform 230 and the carriages 222 to move along the other rails 202, 203 in the second set of rails 201-203.

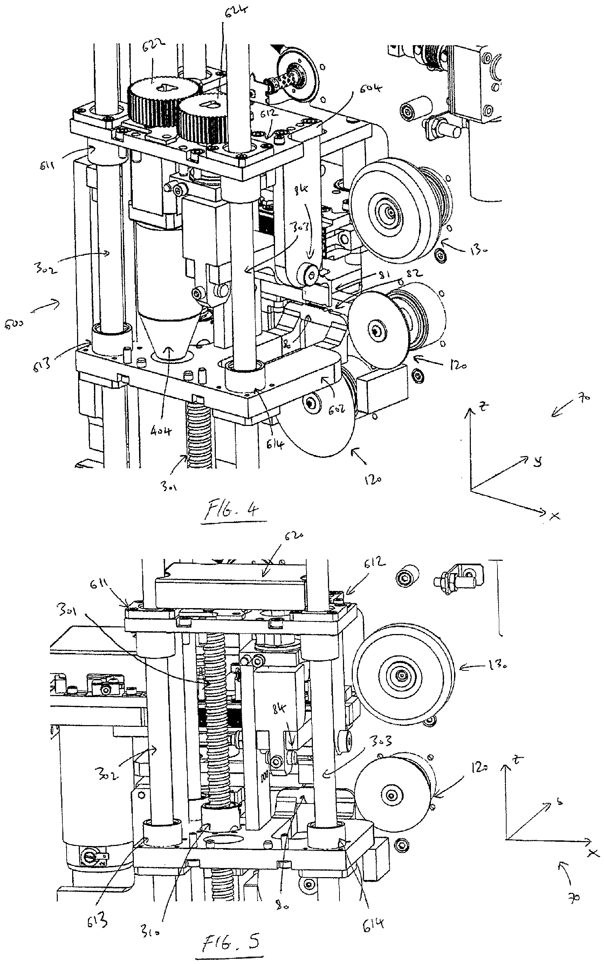

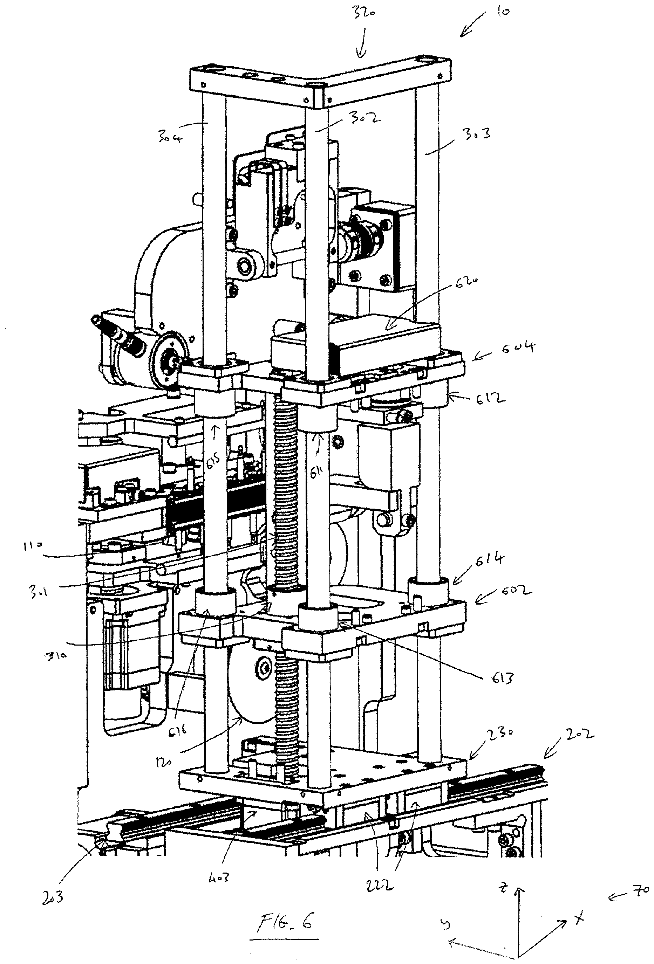

The key clamp support 600 is best illustrated in FIGs. 4 and 5, which both illustrate a portion of the key cutting machine 10 with parts removed in order to reveal other parts. FIG. 6 illustrates a perspective view of the key cutting machine with the same parts removed as those that have been removed in FIG. 5.

The key clamp support 600 comprises a lower platform 602 and an upper platform 604. An upper part of the key clamp 80, comprising the upper jaw 81, is mounted to the upper platform 604. A lower part of the key clamp 80, comprising the lower jaw 82, is mounted to the lower platform 602. An interconnect 606, in the form of a plate, fixedly connects the lower platform 602 to the upper platform 604. The interconnect 606 is visible in FIGs 1A and 1B, but has been removed from FIGs 4, 5 and 6 to reveal the parts behind it.

The key cutting machine 10 comprises a fourth motor 404 supported by the key clamp support 600. The fourth motor 404 is configured to cause relative motion of the jaws 81, 82 of the key clamp 80 in order to cause the key clamp 80 to grip and retain a key blank, or to release a key blank. In FIG. 4, a cover 620 (shown in FIG. 5, for example), has been removed to reveal part of a mechanism that is used to convey the rotary motion of the fourth motor 404 to the jaws 81, 82 of the key clamp 80. In this regard, two cogs 622, 624 are provided. The fourth motor 404 drives the first cog 622, which in turn drives a second cog 624. Means is provided for converting the rotary motion of the second cog 624 into rotary motion that enables the first jaw 81 to rotate about a hinge 84, thereby causing the first jaw 81 to move relative to the second jaw 82.

The fourth motor 404 is supported by the key clamp support 600. In this regard, the fourth motor 404 is mounted to the upper platform 604 of the key clamp support 600.

The fourth motor 404 has been removed in FIGs 5 and 6 to reveal a ball screw 310 located on the first rail 301 of the third set of rails 301. The third set of rails 301-304 is arranged to enable vertical movement of the key clamp support 600. The vertical dimension is defined by the z-axis in the FIGs. The first rail 301 in the third set of rails 301-304 is an elongate shaft with an external threading. The ball screw 310 extends around at least the majority of the circumference of the first rail 301. The ball screw 310 is engageable with the external thread on the first rail 301. The ball screw 310 is fixedly connected to the key clamp support 600. In this example, the ball screw 310 is fixedly connected to the lower platform 602 of the support 600.

The third motor 301 may be a stepper motor. The third motor 301 is configured to rotate the first rail 301 in the third set of rails 301-304, which causes the ball screw 310 to move along the first rail 301.

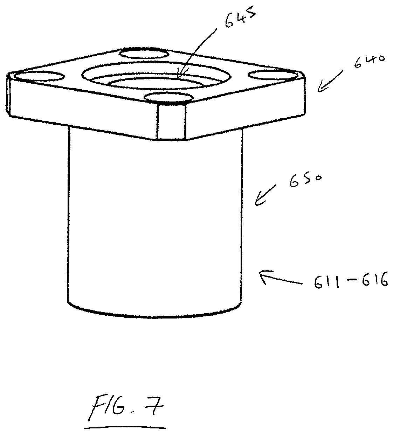

A plurality of bearings 611-616 are provided to locate the upper and lower platforms 602, 604 on second, third and fourth rails 302-304 in the third set of rails 301-304 that extend upwardly from the platform 230 that is movable along rails 202, 203 in the second set of rails 201-203. FIG. 7 illustrates an individual bearing 611-616. The bearing 611-616 includes a flange 640 and a collar 650. The flange 640 is fastened to a platform 602, 604 and the collar 650 extends through an aperture in the platform 602, 604. Each rail 302-304 extends through an aperture 645 in the bearing 611-616. The aperture 645 extends through the flange part 640 and the collar part 650 of the bearing 611-616. The bearings 611-616 advantageously locate the platforms 602, 604 on the second, third and fourth rails 602-604 so that the key clamp support 600 can slide along the rails 602-604 in a stable manner.

A connector 320 is provided at the distal end of the second, third and fourth rails 302-304 in the third set of rails 301-304 connect them together and (help to) fix them in position relative to each other. In the illustrated example the connector 320 is L-shaped, but in other examples the connector 320 may have a different shape.

An interconnect 330 (which, in this example is the form of a plate), fixedly connects the platform 230 to the connector 320 to add rigidity and help to keep the rails 302-304 in fixed in position (e.g., during movement of the key clamp support 600 along the rails 302-304). The interconnect 330 is, in effect, a brace.

When the third motor 403 rotates the first rail 301 in the third set of rails 301-304 to move the ball screw 310, the (fixed) connection between the ball screw 310 and the key clamp support 600 causes the key clamp support 600 (and therefore the key clamp 80) to move along the other rails 302-304 in the third set of rails 302-304.

In the key cutting machine 10 described above and illustrated in the FIGs, first, second and third sets of rails 101-103, 201-203, 301-304 are provided. The rails 101-103, 201-203, 301-304 within a particular set of rails 101-103, 201-203, 301-304 are substantially parallel to each other. Each set of rails 101, 103, 201-203, 301-304 is substantially orthogonal to each of the other sets of rails 101-103, 201-203, 301-304. That is, the longest extent of the rails 101-103, 201-203, 301-304 in a particular set of rails 101-103, 201-203, 301-304 is substantially perpendicular to the longest extent of the rails 101-103, 201-203, 301-304 in another set of rails 101-103, 201-203, 301-304.

In the illustrated example, the first set of rails 101-103 is the lowermost set of rails in the vertical dimension. That is, the second set of rails 201-203 and the third set of rails 301-304 are positioned at least partially above the first set of rails 101-103 in the vertical dimension. The second set of rails 201-203 is positioned between the first set of rails 101-103 and the third set of rails 301-304 in the vertical dimension, such that the second set of rails 201-203 is at least partially above the first set of rails 101-103 and at least partially below the third set of rails 301-304.

The first set of rails 101-103 is arranged to enable movement of the key clamp support 600 and the key clamp 80 in the depth dimension (which is aligned with the y-axis in the FIGs), relative to the key cutting instruments 110, 120, 130. The first motor 401 is arranged to move the key clamp support 600 and the key clamp 80 along the first set of rails 101-103, in the depth dimension, relative to the key cutting instrument(s) 110, 120, 130. Movement of the key clamp support 600 and the key clamp 80 along the first set of rails 101-103 occurs due to the movement of: a), the ball screw 110, b) the carriages 122, c) the supports 124, d) the platform 230, e) the second and third rails 202, 203 in the second set of rails 201-203, and f) the third set of rails 301-304 along the first set of rails 101-103, and the interconnection between (i) those elements and (ii) the key clamp support 600 and the key clamp 80. When the first motor 401 is operational and causing the key clamp support 600 and the key clamp 80 to move along the first set of rails 101-103 in the depth dimension, the first motor 401 also causes each of the second, third and fourth motors 402-404 also move in the depth dimension. The first motor 401 is therefore arranged to cause the second, third and fourth motors 402, 403, 404 to move in the depth dimension when moving the key clamp support 600 and the key clamp 80 in the depth dimension.

The second set of rails 201-203 is arranged to enable movement of the key clamp support 600 and the key clamp in the width dimension (which is aligned with the x-axis in the FIGs), relative to the key cutting instruments 110, 120, 130. The second motor 402 is arranged to move the key clamp support 600 and the key clamp 80 along the second set of rails 201-203, in the width dimension, relative to the key cutting instrument(s) 110, 120, 130. Movement of the key clamp support 600 and the key clamp 80 along the second set of rails 201-203 occurs due to the movement of: a) the ball screw 210, b) the carriages 222, c) the platform 230, and d) the third set of rails 301-304 along the second set of rails 201-203, and the interconnection between (i) those elements and (ii) the key clamp support 600 and the key clamp 80. When the second motor 402 is operational and causing the key clamp support 600 and the key clamp 80 to move along the second set of rails 201-203 in the width dimension, the second motor 402 also causes the third and fourth motors 403, 404 to move simultaneously in the width dimension without needing to simultaneously move the first motor 401. The third and fourth motors 403, 404 translate in the width dimension. The first motor 401 may remain stationary while the second motor 402 is causing the key clamp support 600 and the key clamp 80 to move along the second set of rails 201-203 in the width dimension.

The third set of rails 301-304 is arranged to enable movement of the key clamp support 600 in the vertical dimension (which is aligned with the z-axis in the FIGs), relative to the key cutting instruments 110, 120, 130. The second set of rails 201-203 is arranged to enable movement of the key clamp support 600 and the key clamp in the width dimension (which is aligned with the x-axis in the FIGs), relative to the key cutting instruments 110, 120, 130. The third motor 403 is arranged to move the key clamp support 600 and the key clamp 80 along the third set of rails 301-304, in the vertical dimension, relative to the key cutting instrument(s) 110, 120, 130. Movement of the key clamp support 600 and the key clamp 80 along the third set of rails 301-304 occurs due to the movement of the ball screw 310. When the third motor 403 is operational and causing the key clamp support 600 and the key clamp 80 to move along the third set of rails 301-304 in the vertical dimension, the third motor 403 also causes the fourth motor to move simultaneously in the width dimension without needing to simultaneously move the first and second motors 401, 402. The fourth motor 404 translates in the vertical dimension. The first and second motors 401, 402 may remain stationary while the third motor 403 is causing the key clamp support 600 and the key clamp 80 to move along the third set of rails 301-304 in the vertical dimension.

It should be appreciated that any combination of the first, second and third motors 401-403 could be moving simultaneously and, as a consequence, the key clamp support 600 and the key clamp 80 can move in multiple dimensions at the same time.

As illustrated in at least FIGs 1A, 1B, 1E, the key cutting machine 10 includes a fifth and a sixth (cutting instrument) motor 405, 406. The fifth motor 405 is coupled to at least one of the one or more key cutting instruments 120, 130 via a drive belt 105, as best seen in FIG. 1E. A belt tensioner 108, which is also mounted to the main wall 501 of the support frame 500 in this example, is coupled to the drive belt 105 to maintain belt tension during operation of the one or more cutting instruments 120, 130. In this example, the drive belt 105 is coupled to the fifth motor 406, the belt tensioner 108, the deburrer 130, and the one or more cutting blades 120. The sixth motor 406 is coupled to and arranged to drive cutting elements in the milling module 110.

The fifth and sixth cutting motors 405, 406 which drive the key cutting instruments 110, 120, 130 remain stationary when the key clamp support 600 and the key clamp 80 are moving in any of the depth, width and vertical dimensions. This is advantageous because the fifth and sixth cutting motors 405, 406 may be heavy.

The key cutting machine 10 may comprise control circuitry for controlling the first, second, third, fourth, fifth and sixth motors 401-406. The control circuitry may comprise one or more processors and memory. The control circuitry/processor(s) may execute computer program instructions, stored in the memory, in order to control the motor(s) 401-406. In operation, the control circuitry may control one or more of the first, second, third and fourth motors 401-405 to cause the key clamp 80 to retrieve and retain a key blank. The key cutting machine 10 may comprise one or more key blank stores from which key blank and retrieved. Each key blank store may store a different type of key blank. In other examples, the key cutting machine 10 may comprise a carrying arrangement to bring the key blank from the one or more key blank stores to the key clamp 80.

The control circuitry may control one or more of the first, second and third motors 401-404 to move the key blank towards one or more of the cutting instruments 110, 120, 130. The control circuitry may control the fifth and/or sixth motors 405, 406 to activate the cutting instruments 110, 120, 130 in order to cut the key blank while the key blank is being retained by the key clamp 80. The control circuitry may control one or more of the first, second, third motors 401-403 to move the key clamp 80 while the key blank is being retained by the key clamp and while the key blank is being cut by a cutting instrument 110, 120, 130, in order to cut the key blank and duplicate a key. After cutting, the control circuitry may control the first, second, third and fourth motors 401-404 to cause the key cutting machine 10 to output the duplicate key to a user.

In some examples, the key cutting machine 10 may also include a reader (not shown) to determine the type of key blank to be cut and the required shape for the blank to be cut to.

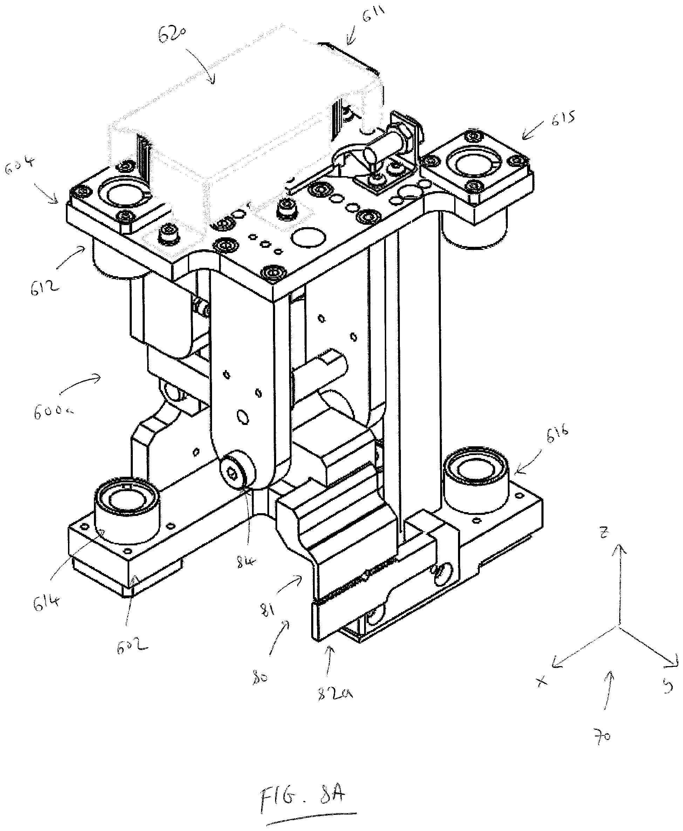

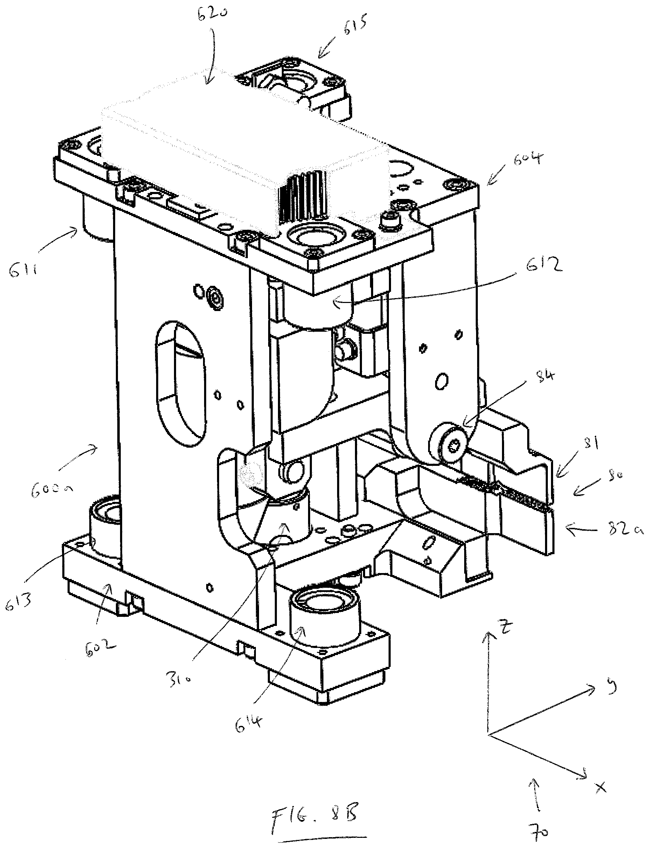

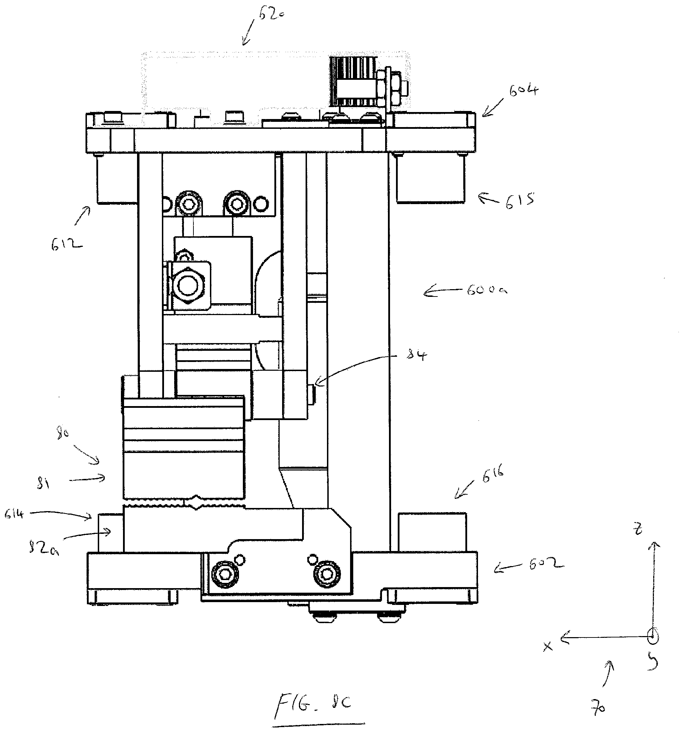

FIGs. 8A, 8B and 8C illustrate front perspective, rear perspective and front views of an alternative key clamp support 600a for the key cutting machine. The alternative key clamp support 600a may be used in place of the key clamp support 600 described above.

The alternative key clamp support 600a differs from the key clamp support 600 described above in that the key clamp 80 comprises a cantilevered lower jaw 82a. The alternative key clamp support 600a is otherwise substantially the same as the key clamp support 600 described above and operates in the key cutting machine 10 in substantially the same way as the key clamp support 600 described above.

Where a structural feature has been described, it may be replaced by means for performing one or more of the functions of the structural feature whether that function or those functions are explicitly or implicitly described.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims. For example, the cutting instruments 110, 120, 130 may have a different form from those described and illustrated. More or fewer rails may be provided in each set of rails 101-103, 201-203, 301-304. For instance, the second and third rails 202, 203 in the second set of rails 201-203 could be replaced by a single rail. The fourth rail 304 in the third set of rails 301-304 might not be provided. In some examples, more or fewer than two motors 405, 406 for driving key cutting instruments 110, 120, 130 may be provided. Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavouring in the foregoing specification to draw attention to those features believed to be of importance it should be understood that the applicant may seek protection via the claims in respect of any patentable feature or combination of features hereinbefore referred to and/or shown in the drawings whether or not emphasis has been placed thereon.

## Claims

1. A key cutting machine, comprising:
one or more key cutting instruments;
a key clamp for receiving and retaining a key blank;
a key clamp support arranged to support the key clamp;
a first set of rails, a second set of rails and a third set of rails, the first set of rails being substantially orthogonal to the second set of rails and the third set of rails, and the second set of rails being substantially orthogonal to the third set of rails;
a first motor arranged to move the key clamp support along the first set of rails relative to the one or more key cutting instruments;
a second motor arranged to move the key clamp support along the second set of rails relative to the one or more key cutting instruments; and
a third motor arranged to move the key clamp support along the third set of rails relative to the one or more key cutting instruments.

2. The key cutting machine of claim 1, further comprising a frame, wherein at least one of the one or more key cutting instruments is fixed to the frame.

3. The key cutting machine of claim 2, wherein the first set of rails is arranged to enable movement of the key clamp support towards and away from the at least one key cutting instrument fixed to the frame, wherein, optionally, the first set of rails comprises a threaded rotatable rail having a ball screw thereon that is coupled to the key clamp support, and optionally the first motor is configured to rotate the threaded rotatable rail of the first set of rails and cause the ball screw to move the key clamp support towards and away from the at least one key cutting instrument fixed to the frame.

4. The key cutting machine of claim 2 or 3, wherein the frame comprises a wall to which the at least one key cutting instrument is fixed, and the first set of rails is arranged to enable movement of the key clamp support towards and away from the wall of the frame.

5. The key cutting machine of any of claims 2 to 4, wherein the frame comprises side walls, and the first set of rails comprises a plurality of rails mounted to inner surfaces of the side walls of the frame.

6. The key cutting machine of any of the preceding claims, wherein the second set of rails is arranged to enable horizontal movement of the key clamp support.

7. The key cutting machine of claim 6, when dependent on claim 4, wherein the second set of rails is arranged to enable horizontal movement of the key clamp support across the wall of the frame.

8. The key cutting machine of claim 6 or 7, wherein the second set of rails is positioned at least partially above the first set of rails, wherein, optionally, at least one rail in the second set of rails is positioned on a platform that is supported at least partially by the first set of rails.

9. The key cutting machine of any of the preceding claims, wherein the second motor is arranged to move the key clamp support along the second set of rails, relative to the one or more key cutting instruments, without needing to simultaneously move the first motor, wherein, optionally, the second motor is arranged to cause the third motor to move, relative to the second set of rails, when moving the key clamp support along the second set of rails relative to the one or more key cutting instruments.

10. The key cutting machine of any of the preceding claims, wherein the third motor is arranged to move the key clamp support vertically along the third set of rails, wherein, optionally, the third set of rails comprises a threaded rotatable rail having a ball screw thereon that is coupled to the key clamp support, and optionally the third motor is configured to rotate the threaded rotatable rail of the third set of rails and cause the ball screw to move the key clamp vertically.

11. The key cutting machine of any of the preceding claims, wherein the third motor is arranged to move the key clamp support along the third set of rails, relative to the one or more key cutting instruments, without needing to simultaneously move the first motor and the second motor.

12. The key cutting machine of any of the preceding claims, further comprising a platform arranged to travel along the second set of rails, wherein the third set of rails is supported by the platform.

13. The key cutting machine of any of the preceding claims, wherein the key clamp comprises first and second jaws for receiving and retaining a key blank, and the key cutting machine comprises a fourth motor arranged to cause relative movement of the first and second jaws, wherein, optionally, the fourth motor is supported by the key clamp support.

14. The key cutting machine of claim 13, wherein the first, second and third motors are arranged to cause the fourth motor to move along the first, second and third sets of rails with the key clamp support.

15. The key cutting machine of claim 13 or 14, wherein the first motor is arranged to cause the second, third and fourth motors to move when causing the key clamp support to move along the first set of rails relative to the one or more key cutting instruments.
